# EUROPEAN PATENT SPECIFICATION

(11) **EP 3 611 624 B1**
(45) Date of publication and mention of the grant of the patent: **28.02.2024**
(21) Application number: 18784699.3
(22) Date of filing: 30.03.2018
(51) Int. Cl.: H04L 67/1001

(54) **COMMUNICATION DEVICE, INFORMATION PROCESSING DEVICE, AND DATA PROCESSING SYSTEM**
KOMMUNIKATIONSVORRICHTUNG, INFORMATIONSVERARBEITUNGSVORRICHTUNG UND DATENVERARBEITUNGSSYSTEM
DISPOSITIF DE COMMUNICATION, DISPOSITIF DE TRAITEMENT D'INFORMATIONS, ET SYSTÈME DE TRAITEMENT DE DONNÉES

(30) Priority: 14.04.2017 JP 2017080289
(43) Date of publication of application: 19.02.2020
(73) Proprietor: Sony Group Corporation, Tokyo 108-0075 (JP)
(72) Inventor: NAKATSURU Tsutomu, Tokyo 108-0075 (JP); KAMINO Itsuki, Tokyo 108-0075 (JP); SUZUKI Yuki, Tokyo 108-0075 (JP); SAKABA Koji, Tokyo 108-0075 (JP)
(74) Representative: D Young & Co LLP
(86) International application number: PCT/JP2018/013633
(87) International publication number: WO 2018/190154

(56) References cited:
- WO-A1-2007/110468
- JP-A- 2001 312 434
- JP-A- 2013 117 782
- JP-A- 2016 181 120
- US-A1- 2001 042 212
- US-A1- 2015 163 299
- US-B1- 9 032 212

## Description

### TECHNICAL FIELD

The present technology relates to a communication device, an information processing device, and a data processing system, and particularly to a communication device, an information processing device, and a data processing system that can reduce a maximum value of a processing time of the entire system.

### BACKGROUND ART

In an electronic money system, a security system, and the like, there has been widely spread an IC card equipped with an external device that can communicate with a reader-writer. Moreover, in recent years, a mobile terminal that is equipped with a noncontact external device, and can perform noncontact communication with a reader-writer has also become common.

In a system that uses such an IC card or a mobile terminal, information exchanged through communication is transmitted to a server from a reader-writer, and is subjected to data processing (for example, refer to Patent Document 1).

### CITATION LIST

### PATENT DOCUMENT

Patent Document 1: Japanese Patent Application Laid-Open No. 2006-99509
US 2001/0042212 A1 describes a system wherein a smart card enabled mobile personal computing environment system stores a user's personalized, fully functional, computing environment in a smart card. A user information database is provided that is resident on a server and contains the user records of a plurality of users containing personal computing environment data with the amount of data in the user record generally larger than the storage capacity of a smart card. The user to specifies the information required to configure the client to the user's preferred personal computing environment. If the correct personal computing environment data is not resident in the smart card, the client queries the server for the information needed and updates the smart card with the new data. The user also manages his personal computing environment data stored on the smart card and the user information database. The server gives the client access to the user's records through a secure Web site. The user accesses his data, adds, modifies, and/or deletes information and transfers data to his smart card via the secure Web site. If the client has a slow or temporary connection with the server, the client is able to accommodate the user's data management needs by downloading the user's records stored on the server's user information database. The user can then manage his data without a connection to the server. Any changes to the user's records are later sent to the server to update the user information database.

US 9,032,212 B1 describes a set of servers that generates at least one challenge that is sent to a client. The servers receive from the client a response that includes a message generated as a function of the challenge. The response also includes a digital signature computed on the message using a secret key of a key pair generated for a current epoch. The client is authenticated based on indications from respective ones of the servers as to whether or not the received response is accepted as valid by that server. Other embodiments involve interaction between a set of servers and a relying party in authenticating a passcode, password or other information received from a client. The client in some embodiments may comprise a connected authentication token or other type of hardware or software authentication token.

US 2015/0163299 A1 discloses an apparatus comprising an interface and one or more processors. The interface receives a request for a web page from a web browser. The processors select a subset of web servers from a resource pool according to a load balancing determination.

### SUMMARY OF THE INVENTION

### PROBLEMS TO BE SOLVED BY THE INVENTION

In the processing time of the entire system including an IC card, reader-writer, and a server, there are large variations in a time required for communication performed between the reader-writer and the server, and a processing time in the server due to the congestion or the like of a communication line and a processing request. As a result, the processing time of the entire system sometimes becomes large.

The present technology has been devised in view of such a situation, and can reduce a maximum value of a processing time of the entire system.

### SOLUTIONS TO PROBLEMS

A communication device according to a first aspect of the present technology is detailed in claim 1.

A data processing system according to a second aspect of the present technology is detailed in claim 5.

Note that the communication device according to the first aspect of the present technology and the data processing system according to the second aspect of the present technology can be implemented by causing a computer to execute programs. Furthermore, the programs to be executed by the computer can be provided by being transmitted via a transmission medium, or with being recorded on a recording medium.

### EFFECTS OF THE INVENTION

According to the first to second aspects of the present technology, a maximum value of a processing time of the entire system can be reduced.

Note that the effect described here is not necessarily limited, and may be any effect described in the present disclosure.

### BRIEF DESCRIPTION OF DRAWINGS

Fig. 1 is a block diagram illustrating a general configuration example of a thin-client data processing system.
Fig. 2 is a flowchart illustrating a communication process example in the data processing system in Fig. 1.
Fig. 3 is a block diagram illustrating a configuration example of a data processing system to which the present technology is applied.
Fig. 4 is a flowchart illustrating a case where the same communication processes as those in Fig. 2 are executed by the data processing system in Fig. 3.
Fig. 5 illustrates a sequence example of a transaction.
Fig. 6 is a diagram illustrating a communication process example describing a first problem.
Fig. 7 is a diagram illustrating a communication process example describing the first problem.
Fig. 8 is a flowchart illustrating communication processes performed by the data processing system in Fig. 3, in which the first problem is solved.
Fig. 9 is a flowchart illustrating communication processes performed by the data processing system in Fig. 3, in which the first problem is solved.
Fig. 10 is a flowchart illustrating communication processes performed in a case where a postprocessing server is provided.
Fig. 11 is a diagram illustrating a communication process example describing a second problem.
Fig. 12 is a flowchart illustrating communication processes performed by the data processing system in Fig. 3, in which the second problem is solved.
Fig. 13 is a flowchart illustrating a modified example of the communication processes in Fig. 12.
Fig. 14 is a flowchart illustrating an example of communication processes performed in a case where a postprocessing server is not used.
Fig. 15 is a block diagram illustrating configuration examples of an IC card and a reader-writer.
Fig. 16 is a block diagram illustrating a configuration example of a mobile terminal.
Fig. 17 is a block diagram illustrating a configuration example of a server device.

### MODE FOR CARRYING OUT THE INVENTION

Hereinafter, a mode for carrying out the present technology (hereinafter, referred to as an embodiment) will be described. Note that the description will be given in the following order.
1. General configuration example of thin-client data processing system
2. Configuration example of data processing system to which present technology is applied
3. First problem that can be caused in configuration including a plurality of servers, and countermeasure
4. Second problem that can be caused in configuration including a plurality of servers, and countermeasure
5. Hardware configuration example

### <1. General configuration example of thin-client data processing system>

As a data processing system that reads out predetermined data from an IC card that performs noncontact communication, executes predetermined processing, and then, writes the processed data into the IC card, there is a thin-client system that generates a command on a server side.

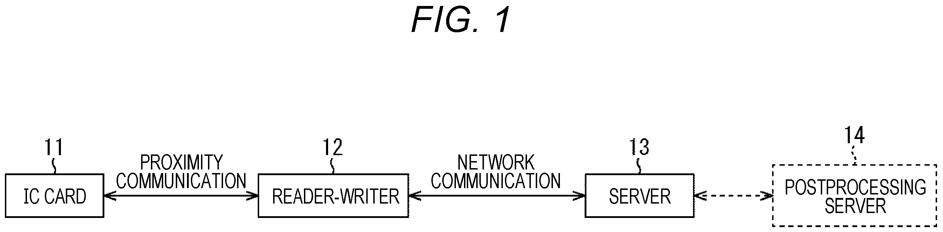

Fig. 1 illustrates a general configuration example of a thin-client data processing system that uses an IC card that performs noncontact communication. The system as illustrated in Fig. 1 does not fall within the scope of the claims.

The data processing system includes an IC card 11, a reader-writer 12, and a server 13. Furthermore, some data processing systems further include a postprocessing server 14.

The IC card 11 is a card equipped with an IC chip, and is an external device that exists on the outside when viewed from the reader-writer 12. The reader-writer 12 reads out predetermined data stored in the IC card 11, from the IC card 11, or writes the predetermined data into the IC card 11. A user owning the IC card 11 is thereby provided with a predetermined service such as an electronic money service, a ticket service of transportation such as railway or bus, or a credit card service. Examples of the data include electronic money information regarding the electronic money system, card information regarding a credit card, ticket information regarding transportation such as railway or bus, a card ID unique to the IC card 11, and the like.

The IC card 11 exchanges the predetermined data with the reader-writer 12 by proximity communication (noncontact communication) compliant with the ISO/IEC 14443 being a standard of a proximity IC card system, or the ISO/IEC 18092 being a standard of near field communication interface and protocol (NFCIP)-1. The proximity communication or the noncontact communication means contactless communication enabled when a distance between devices that perform communication falls within several tens centimeter, and also includes communication performed in a state in which (casings of) the devices that perform communication are in contact.

The reader-writer 12 exchanges the predetermined data with the server 13 by network communication performed via a predetermined network. Examples of the predetermined network include the Internet, a telephone circuit network, a satellite communication network, various local area networks (LANs) including Ethernet (registered trademark), a wide area network (WAN), a dedicated circuit network such as an internet protocol-virtual private network (IP-VPN), and the like.

In accordance with a request from the reader-writer 12, the server 13 performs predetermined data processing regarding a service provided by the data processing system to the user. For example, the server 13 performs management of electronic money data, management of user data, and the like.

The postprocessing server 14 performs postprocessing following the data processing executed by the server 13.

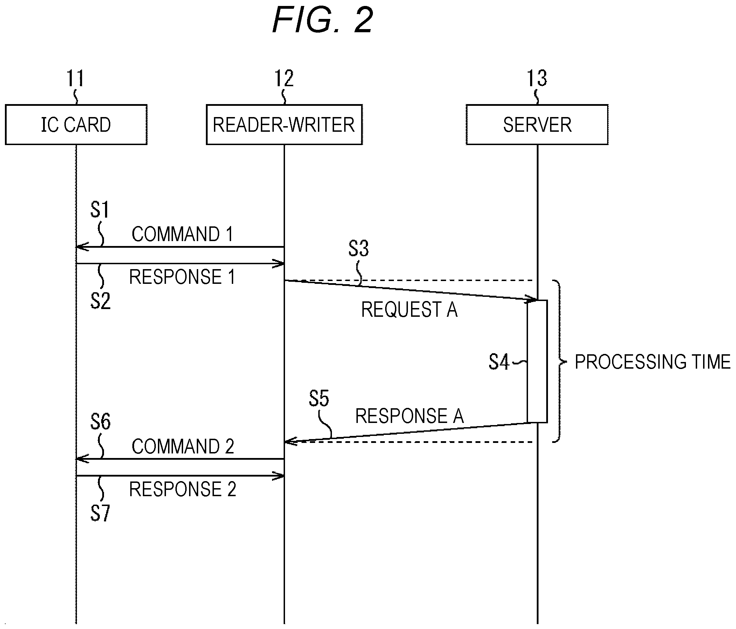

Fig. 2 is a flowchart illustrating a communication process example in the data processing system in Fig. 1. The process as illustrated in Figure 2 does not fall within the scope of the claims.

In step S1, the reader-writer 12 transmits a command 1, which is one of predetermined commands, to the IC card 11 detected with a communication distance of the reader-writer 12.

In step S2, the IC card 11 transmits a response 1 to the reader-writer 12 as a reply to the command 1 received from the reader-writer 12.

In step S3, the reader-writer 12 receives the response 1 from the IC card 11, and transmits a request A requesting predetermined processing, to the server 13 in accordance with the received response 1.

In step S4, the server 13 receives the request A from the reader-writer 12, and executes the predetermined processing corresponding to the received request A. In step S5, on the basis of a processing result, the server 13 transmits a response A being a reply to the request A, to the reader-writer 12. As illustrated in Fig. 2, from the viewpoint of the reader-writer 12, a processing time of the server 13 is a time from when the request A is transmitted to when the response A is received, and includes a time taken for communication performed between the reader-writer 12 and the server 13.

In step S6, the reader-writer 12 receives the response A from the server 13, and transmits a command 2 to the IC card 11 as a next command that is based on the response A.

In step S7, the IC card 11 transmits a response 2 to the reader-writer 12 as a reply to the command 2 received from the reader-writer 12.

As described above, commands and responses are exchanged between the IC card 11 and the reader-writer 12 by proximity communication. Requests and responses are exchanged between the reader-writer 12 and the server 13 by network communication.

In such a data processing system, a processing time taken in the IC card 11, a processing time taken in the reader-writer 12, and a time taken for communication performed between the IC card 11 and the reader-writer 12 are short times, and variations (standard deviation) in times are small.

On the other hand, as for a processing time taken in the server 13 and a time taken for communication performed between the reader-writer 12 and the server 13, variations (standard deviation) in times become large in some cases due to the traffic of a communication line, the congestion of processing requests from a number of reader-writers 12, or the like.

Thus, for reducing a maximum value of a processing time of the entire data processing system, it is necessary to shorten an average of times taken for processing performed between the reader-writer 12 and the server 13, and reduce variations.

### <2. Configuration example of data processing system to which present technology is applied>

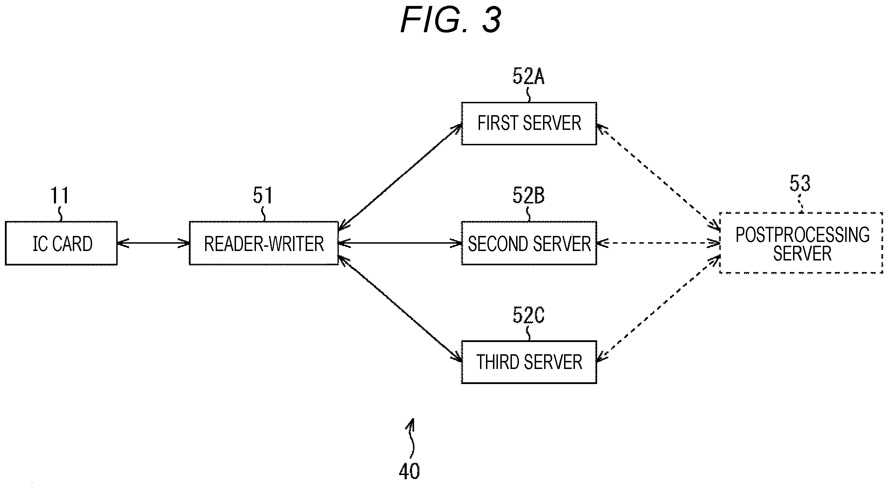

Thus, Fig. 3 illustrates a configuration example of a data processing system to which the present technology is applied, and which aims to shorten a processing maximum time of the entire system.

A data processing system 40 illustrated in Fig. 3 includes the IC card 11, a reader-writer 51, and three servers 52 including a first server 52A, a second server 52B, and a third server 52C. Furthermore, similarly to the case in Fig. 1, some data processing systems 40 further include a postprocessing server 53.

As clearly seen from Fig. 3, the data processing system 40 largely differs from the data processing system in Fig. 1 in that the servers 52 corresponding to the server 13 in Fig. 1 include a plurality of servers. The IC card 11 is the same as that in the data processing system in Fig. 1.

Note that, in the example in Fig. 3, a configuration in which the three servers 52 are provided is illustrated. Nevertheless, it is only required that the plurality of servers 52 is provided. Thus, the number of servers 52 may be two, or four or more.

The reader-writer 51 exchanges predetermined data with the IC card 11 being an external device, by proximity communication (noncontact communication) compliant with the ISO/IEC 14443 being a standard of a proximity IC card system, or the ISO/IEC 18092 being a standard of NFCIP-1.

Furthermore, the reader-writer 51 exchanges the predetermined data with the plurality of servers 52 by network communication performed via a predetermined network. Examples of the predetermined network include the Internet, a telephone circuit network, a satellite communication network, various local area networks (LANs) including Ethernet (registered trademark), a wide area network (WAN), a dedicated circuit network such as an internet protocol-virtual private network (IP-VPN), and the like.

Each of the plurality of servers 52 (the first to third servers 52A to 52C) performs predetermined data processing regarding a service provided by the data processing system 40 to the user. For example, the server 52 performs management of electronic money data, management of user data, and the like.

The postprocessing server 53 performs postprocessing for data processing executed by the plurality of servers 52 (the first to third servers 52A to 52C), such as, for example, collation processing or abnormality detection processing for processing results obtained by the plurality of servers 52.

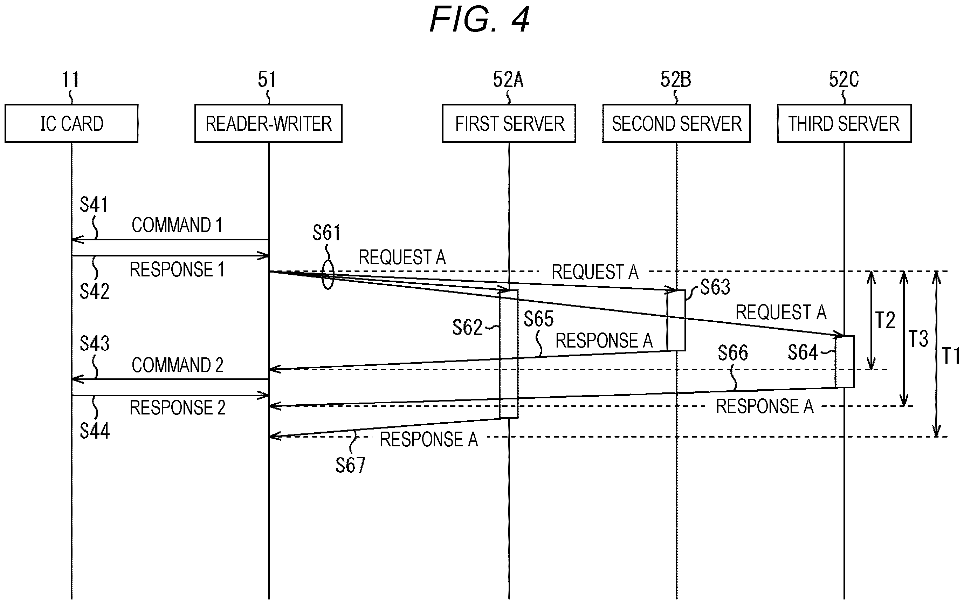

Fig. 4 is a flowchart illustrating a case where the same communication processes as the sequence illustrated in Fig. 2 are executed by the data processing system 40 in Fig. 3.

In step S41, the reader-writer 51 transmits a command 1, which is one of predetermined commands, to the IC card 11 detected within a communication distance of the reader-writer 51.

In step S42, the IC card 11 transmits a response 1 to the reader-writer 51 as a reply to the command 1 received from the reader-writer 12.

In step S61, the reader-writer 51 receives the response 1 from the IC card 11, and in accordance with the received response 1, transmits a request A requesting predetermined processing, to the three servers 52, in other words, the first server 52A, the second server 52B, and the third server 52C.

Each of the first server 52A, the second server 52B, and the third server 52C starts (executes) predetermined processing corresponding to the received request A, from a time point at which the request A is received from the reader-writer 51. Specifically, in step S62, the first server 52A starts the predetermined processing corresponding to the request A, in step S63, the second server 52B starts the predetermined processing corresponding to the request A, and in step S64, the third server 52C starts the predetermined processing corresponding to the, request A.

Then, on the basis of a processing result, each of the first server 52A, the second server 52B, and the third server 52C transmits, to the reader-writer 51, a response A being a reply to the request A, at a time point at which the predetermined processing corresponding to the received request A ends. In the example in Fig. 4, the order of processing end timings is the second server 52B, the third server 52C, and the first server 52A. More specifically, first of all, in step S65, the second server 52B transmits the response A to the reader-writer 12, in step S66, the third server 52C transmits the response A to the reader-writer 12, and in step S67, the first server 52A the response A to the reader-writer 12.

The requests transmitted from the reader-writer 51 to the plurality of servers 52 include the same content, and the plurality of servers 52 transmits, to the reader-writer 51, a result obtained by executing the same processing for the same request, as a response. Thus, the responses to be transmitted from the servers 52 to the reader-writer 51 are results that are based on the same processing, but data to be transmitted sometimes vary.

For example, in a case where requests to be transmitted from the reader-writer 51 to the plurality of servers 52 are requests for a session key, each of the servers 52 executes processing of generating random numbers as a session key, on the basis of the request. Because random numbers to be generated by each of the servers 52 generally become different values, random numbers (values) serving as session key information that are to be transmitted by each of the servers 52 to the reader-writer 51 as a session key become different numbers (values).

The reader-writer 51 transmits the next command 2 to the IC card 11 using data of a server 52 that has replied earliest among the plurality of servers 52 that has transmitted the same request. In the example in Fig. 4, because the response A is received from the second server 52B earliest, the reader-writer 51 receives the response A from the second server 52B, and then, in step S43, transmits the command 2 to the IC card 11 as a next command that is based on the response A.

In step S44, the IC card 11 transmits a response 2 to the reader-writer 51 as a reply to the command 2 received from the reader-writer 51.

As described above, in the data processing system 40, the reader-writer 51 transmits the same request A to the plurality of servers 52. Each of the servers 52 receives the request A from the reader-writer 51, executes the same processing, and upon the end of the processing, transmits the response A being a reply to the received request A, to the reader-writer 51. Thus, the plurality of servers 52 concurrently executes the same processing for the request A transmitted by the reader-writer 51.

Then, the reader-writer 51 executes the next processing using data of a server 52 that has transmitted the response A earliest among the plurality of servers 52.

In Fig. 4, from the viewpoint of the reader-writer 51, processing times taken for the request A of the first server 52A, the second server 52B, and the third server 52C are denoted by T1, T2, and T3, and magnitudes of these processing times are in a relationship represented by T2 < T3 < T1.

Thus, in this example, the reader-writer 51 starts to transmit the command 2 to the IC card 11, at a timing at which the response is received from the second server 52B.

In the data processing system 40, a minimum value of processing times (including communication times) taken by the plurality of servers 52 becomes a processing time of a server group from the viewpoint of the reader-writer 51. Thus, as compared with the data processing system including one server 13 that is illustrated in Fig. 1, an average of processing times becomes shorter and a variation (standard deviation) becomes smaller. Thus, it is possible to reduce the maximum value of a processing time of the entire data processing system.

Furthermore, in the data processing system 40, because the plurality of servers 52 is included, even in a case where one (for example, the second server 52B) among the servers 52 stops, processing can be performed using the other servers 52 (the first server 52A and the third server 52C).

Moreover, because a plurality of communication paths are also provided between the plurality of servers 52 and the reader-writer 51, even in a case where temporary load rise or disconnection of a predetermined communication path occurs, processing can be performed using servers 52 that use the other communication paths. For example, in a case where a communication path between the reader-writer 51 and the first server 52A is a public network, and a communication path between the reader-writer 51 and the second server 52B is a dedicated circuit, if the dedicated circuit gets congested, processing that uses the first server 52A can be performed using the public network.

Thus, according to the data processing system 40, the availability of the entire system can be enhanced and usability is enhanced.

Note that, in the aforementioned example, an example in which the reader-writer 51 transmits requests to all the plurality of servers 52 included in the data processing system 40 is illustrated, but the reader-writer 51 needs not always transmit requests to all the servers 52, and the reader-writer 51 may be configured to appropriately select two or more servers 52 on the basis of a predetermined condition, and transmit a request to the selected servers 52.

For example, the following methods can be used as a method of deciding two or more servers 52 to which requests are to be transmitted, from among the plurality of servers 52 included in the data processing system 40.
(1) The reader-writer 51 decides servers 52 to which requests are to be transmitted, depending on the type of requests to be transmitted.
(2) The reader-writer 51 decides servers 52 to which requests are to be transmitted, on the basis of arrival times of responses previously received. Specifically, the reader-writer 51 selects a plurality of servers 52 having earlier arrival times, or excludes one or more servers 52 having later arrival times.

### <3. First problem that can be caused in configuration including a plurality of servers, and countermeasure>

Next, a problem that can be caused in a case where a configuration including a plurality of servers as in the data processing system 40 is employed, and a countermeasure against the problem that is implemented in the data processing system 40 will be described.

First of all, a first problem that can be caused in a configuration including a plurality of servers, and a countermeasure will be described.

In a case where communication is performed between the reader-writer 51 and the servers 52 only once, data communication of the data processing system 40 is performed as in the sequence illustrated in Fig. 4, but a transaction (a series of processes) generally includes a plurality of times of communication performed between the reader-writer 51 and the server 52.

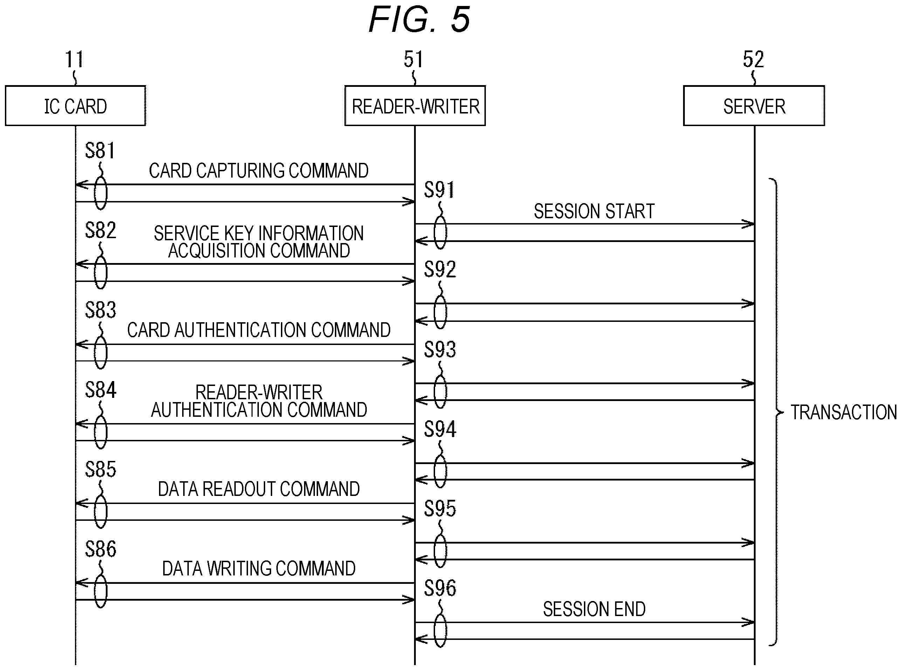

Fig. 5 illustrates a sequence example of a transaction including a plurality of times of communication performed between the reader-writer 51 and the server 52.

As one transaction, exchanges of commands and responses in steps S81 to 86 are sequentially executed between the IC card 11 and the server 52.

In step S81, a command for capturing the IC card 11 (so-called polling command) and a response thereto are transmitted. In step S82, a command for acquiring service key information corresponding to a predetermined service provided by the IC card 11, and a response thereto are transmitted. In step S83, a command for authenticating the IC card 11 and a response thereto are transmitted. In step S84, a command for authenticating the reader-writer 51 and a response thereto are transmitted. In step S85, a command for reading out data stored in the IC card 11, and a response thereto are transmitted. In step S86, a command for writing predetermined data into the IC card 11, and a response thereto are transmitted.

Then, in accordance with the commands and the responses transmitted in steps S81 to 86, exchanges of requests and responses are sequentially executed in steps S91 to S96 between the reader-writer 51 and the server 52.

At this time, for example, in the response transmitted in step S91, information transmitted from the server 52 to the reader-writer 51 sometimes includes information necessary for exchanging requests and responses in subsequent steps S92 to S96. As an example of such information, for example, there is session key information being information indicating a session key. Specifically, for example, in step S91, a request for a session key is requested, and the server 52 generates predetermined random numbers to be used as a session key, and replies the predetermined random numbers to the reader-writer 51 as a response. In steps S92 to S96, requests and responses are exchanged using the session key generated in step S91.

In this manner, in a case where a processing result processed by a server at a certain timing is required in subsequent processing, a problem is not caused in a data processing system having a configuration including one server as in Fig. 1 because the server 13 recognizes all pieces of information that have been exchanged so far. Nevertheless, a problem (first problem) can be caused in a case where the plurality of servers 52 is used as in the data processing system 40 in Fig. 3.

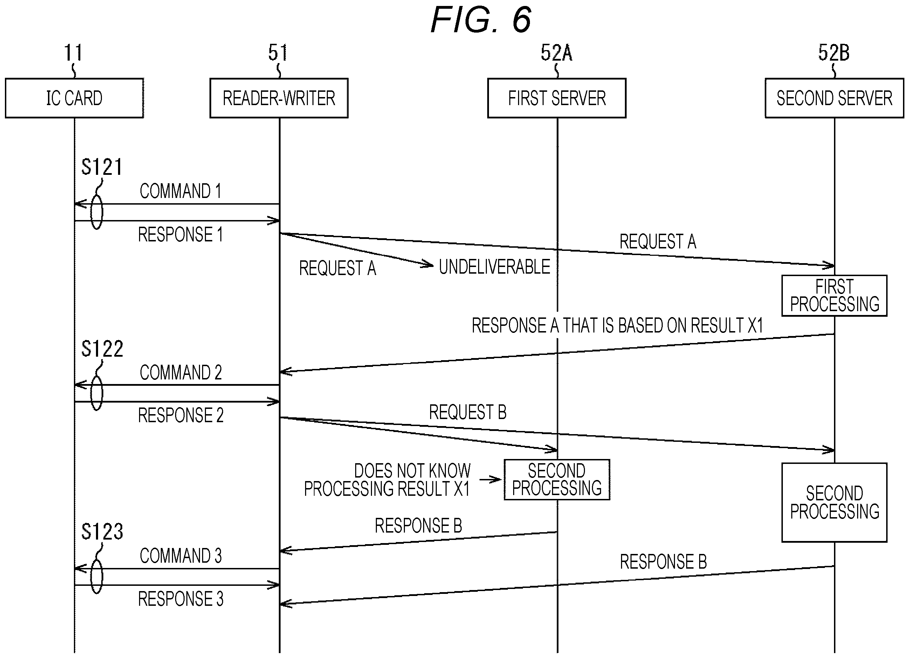

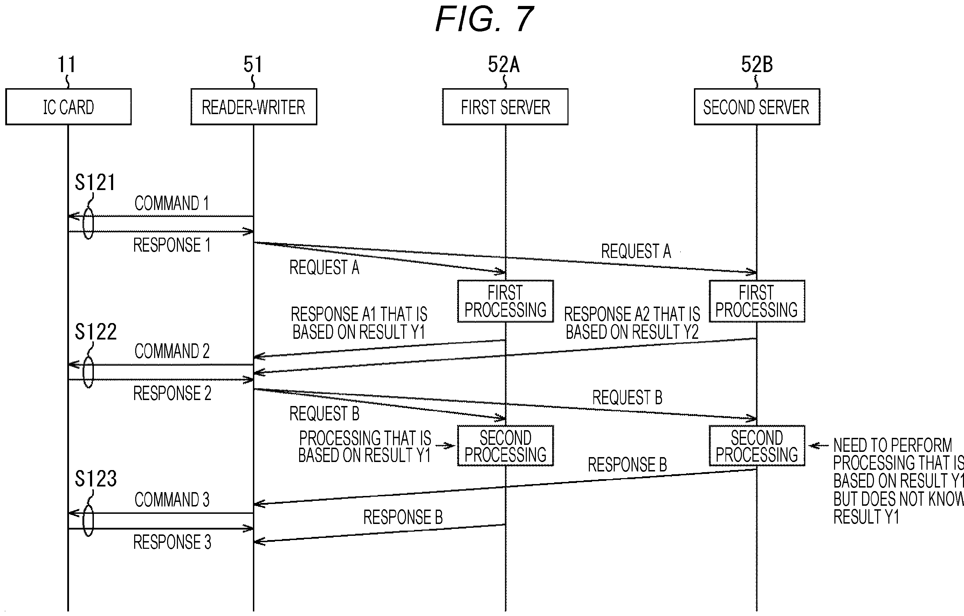

Figs. 6 and 7 illustrate communication process examples of the first problem that can be caused in the data processing system 40 having a configuration including a plurality of servers. Note that, in the description subsequent to Fig. 6, because a configuration including a plurality of servers is only required to include at least two servers 52, the third server 52C is omitted.

The communication process example in Fig. 6 illustrates an example of a case where the reader-writer 51 sequentially requests each of the servers 52 to perform first processing and second processing, and uses a first processing result for a second processing result, and a case where the first processing results obtained in the servers 52 are the same.

As a major flow of a transaction, the reader-writer 51 exchanges a command and a response with the IC card 11 three times in steps S121 to S123. Then, in step S121, the reader-writer 51 receives a response 1 from the IC card 11, and then, transmits a request A to each of the servers 52, requests first processing, and receives a response A from each of the servers 52. Furthermore, the reader-writer 51 receives a response 2 from the IC card 11 in step S122, and then, transmits a request B to each of the servers 52, requests second processing, and receives a response B from each of the servers 52.

The reader-writer 51 transmits the request A for requesting the first processing, to the first server 52A and the second server 52B. The second server 52B receives the request A, executes the first processing, and transmits a response A that is based on a processing result X1, to the reader-writer 51 as an execution result, but the first server 52A fails to receive the request A because a communication path cannot be used temporarily. For this reason, the first server 52A does not execute the first processing, and the processing result X1 that is to be obtained by executing the first processing fails to be obtained.

Therefore, in a case where the first server 52A and the second server 52B receive a request B from the reader-writer 51 and execute the second processing, and reply the processing result as a response B, because the first server 52A does not know the processing result X1, a correct second processing result fails to be obtained.

The communication process example in Fig. 7 illustrates an example of a case where the reader-writer 51 sequentially requests each of the servers 52 to perform first processing and second processing, and uses a first processing result for a second processing result, and a case where the first processing results obtained in the servers 52 are different.

The reader-writer 51 transmits the request A for requesting the first processing, to the first server 52A and the second server 52B. The first server 52A receives the request A, executes the first processing, and transmits a response A1 that is based on a processing result Y1, to the reader-writer 51 as an execution result. The second server 52B receives the request A, executes the first processing, and transmits a response A2 that is based on a processing result Y2, to the reader-writer 51 as an execution result.

Because the reader-writer 51 receives the response A1 from the first server 52A earlier among the response A1 transmitted from the first server 52A and the response A2 transmitted from the second server 52B, the reader-writer 51 adopts the response A1 that is based on the processing result Y1 that has been transmitted from the first server 52A, and executes the next communication process with the IC card 11.

Then, the reader-writer 51 transmits a request B for requesting the second processing, to the first server 52A and the second server 52B, but the second server 52B does not know that the reader-writer 51 has adopted the processing result Y1 of the first server 52A, and does not know the processing result Y1 either. Thus, the second server 52B cannot obtain a correct second processing result.

In this manner, in a case where a processing result processed by a server at a certain timing is required in subsequent processing, in the data processing system 40 that uses the plurality of servers 52, in a case where communication is performed in the same manner as a data processing system having a configuration including one server, without performing any countermeasure, a correct processing result sometimes fails to be obtained as processing of the entire transaction.

Thus, for solving the above-described first problem, each of the servers 52 of the data processing system 40 transmits information required in subsequent processing in each of the servers 52, with being included in a response to the reader-writer 51, and the reader-writer 51 of a data processing system 50 transmits the information with being included in a request to be transmitted to each of the servers 52 next.

As described above, in a case where a response is received from each of the plurality of servers 52, because the next processing is executed using data of a server 52 that has transmitted a response earliest, the reader-writer 51 transmits information included in the response that is from the server 52 and that has been received earliest, with being included in a request to be transmitted to each of the servers 52 next.

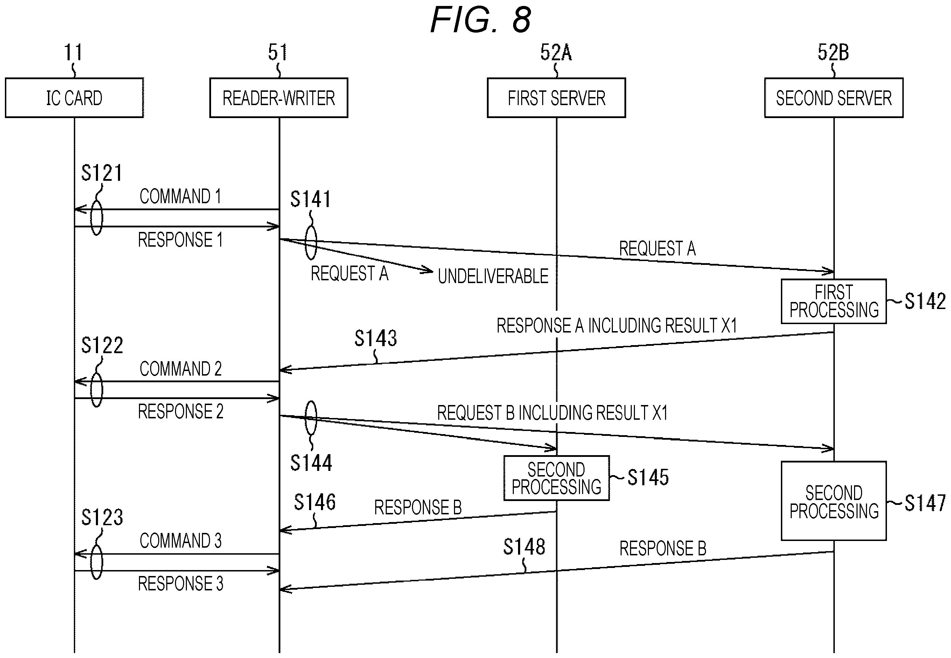

Fig. 8 is a flowchart illustrating communication processes performed by the data processing system 40, in which a countermeasure against the first problem is taken in the same situation as Fig. 6.

In step S121, exchange of a command 1 and a response 1 are executed between the IC card 11 and the reader-writer 51, and then, in step S141, the reader-writer 51 transmits a request A to the plurality of servers 52.

Similarly to Fig. 6, the request A is not delivered to the first server 52A, and is delivered to the second server 52B.

In step S142, the second server 52B executes the first processing, and in step S143, transmits a response A including a processing result X1, to the reader-writer 51. The processing result X1 is encoded using a key shared among the plurality of servers 52, and then, transmitted with being assigned a digital signature or message authentication code.

In step S122, a command 2 and a response 2 are transmitted and received between the IC card 11 and the reader-writer 51, and then, in step S144, the reader-writer 51 transmits a request B including a processing result X1 received in step S143, to the plurality of servers 52. The processing result X1 transmitted at this time is also encoded using a key shared among the plurality of servers 52, and is assigned a digital signature or message authentication code.

Each of the servers 52 that has received the request B including the processing result X1 executes the second processing using the processing result X1. Specifically, in step S145, the first server 52A executes the second processing using the processing result X1, and in step S147, the second server 52B executes the second processing using the processing result X1.

After the execution end of the second processing in step S145, in step S146, the first server 52A transmits a processing result of the second processing to the reader-writer 51 as a response B to the request B. After the execution end of the second processing in step S147, in step S148, the second server 52B transmits a processing result of the second processing to the reader-writer 51 as a response B to the request B.

After the reader-writer 51 receives the response B from the first server 52A being the response B received earliest, in step S123, a command 3 and a response 3 are transmitted between the IC card 11 and the reader-writer 51.

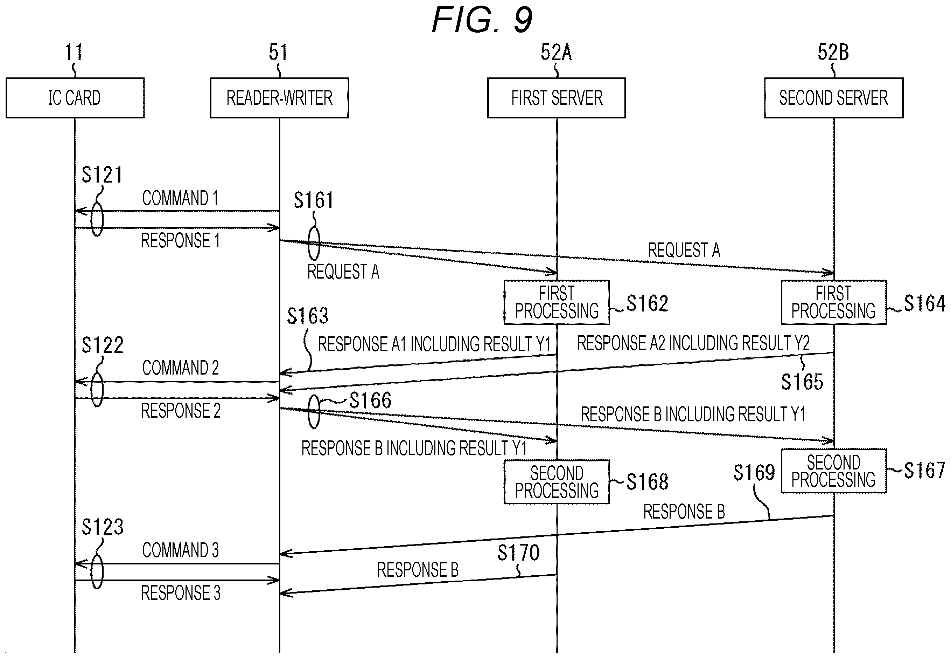

Fig. 9 is a flowchart illustrating communication processes performed by the data processing system 40, in which a countermeasure against the first problem is taken in the same situation as Fig. 7.

In step S121, exchange of a command 1 and a response 1 are executed between the IC card 11 and the reader-writer 51, and then, in step S161, the reader-writer 51 transmits a request A to the plurality of servers 52.

Each of the servers 52 that has received that request A executes the first processing. Specifically, In step S162, the first server 52A executes the second processing, and in step S163, transmits a response A1 including a processing result Y1 of the first processing, to the reader-writer 51. Similarly, in step S164, the second server 52B executes the first processing, and in step S165, transmits a response A2 including a processing result Y2 of the first processing, to the reader-writer 51. The processing results Y1 and Y2 are also encoded using a key shared among the plurality of servers 52, and are assigned a digital signature or message authentication code.

The reader-writer 51 receives the response A1 from the first server 52A in step S163 earlier than the response A2 from the second server 52B in step S165.

In step S122, a command 2 and a response 2 are transmitted and received between the IC card 11 and the reader-writer 51, and then, in step S166, the reader-writer 51 transmits a request B including a processing result Y1 received in step S163, to the plurality of servers 52. The processing result Y2 is also encoded using a key shared among the plurality of servers 52, and is assigned a digital signature or message authentication code.

Each of the servers 52 that has received the request B including the processing result Y1 executes the second processing using the processing result Y1. In other words, in step S168, the first server 52A executes the second processing using the processing result Y1, and in step S167, the second server 52B executes the second processing using the processing result Y1.

After the execution end of the second processing in step S167, in step S169, the second server 52B transmits the response B including the processing result of the second processing, to the reader-writer 51. After the execution end of the second processing in step S168, in step S170, the first server 52A transmits the response B including the processing result of the second processing, to the reader-writer 51.

After the reader-writer 51 receives the response B from the second server 52B being the response B received earliest, in step S123, a command 3 and a response 3 are transmitted between the IC card 11 and the reader-writer 51.

As described above, each of the servers 52 of the data processing system 40 transmits information required in subsequent processing in each of the servers 52, with being included in a response to the reader-writer 51, and the reader-writer 51 of the data processing system 40 transmits the information with being included in a request to be transmitted to each of the servers 52 next. The first problem as described in Figs. 6 and 7 can be thereby solved.

Furthermore, in a case where information that is to be received from each of the servers 52 and is required by each of the servers 52 in subsequent processing is information that should not be known to the reader-writer 51, the server 52 shares the information among the plurality of servers 52, encodes the information using a key unknown to the reader-writer 51 (key not decodable by the reader-writer 51), and then, transmits the information with being included in a response. Information can be thereby shared with the other servers 52 unbeknown to the reader-writer 51.

### <Case of including postprocessing server>

A case where the data processing system 40 is provided with the postprocessing server 53 will be supplementarily described.

In a case where the data processing system 40 is provided with the postprocessing server 53, when each of the servers 52 performs processing, each of the servers 52 also performs processing of transmitting information required for processing of the entire transaction (transaction required information), to the postprocessing server 53.

The postprocessing server 53 receives the transaction required information transmitted from each of the servers 52, and on the basis of the transaction required information of each of the servers 52, performs processing of determining a result of the entire transaction (postprocessing). Examples of the processing of determining a result of the entire transaction include maintenance processing for electronic money balance information stored in each of the servers 52, processing abnormality detection processing, and the like, in a case where the data processing system 40 is an electronic money system that processes electronic money.

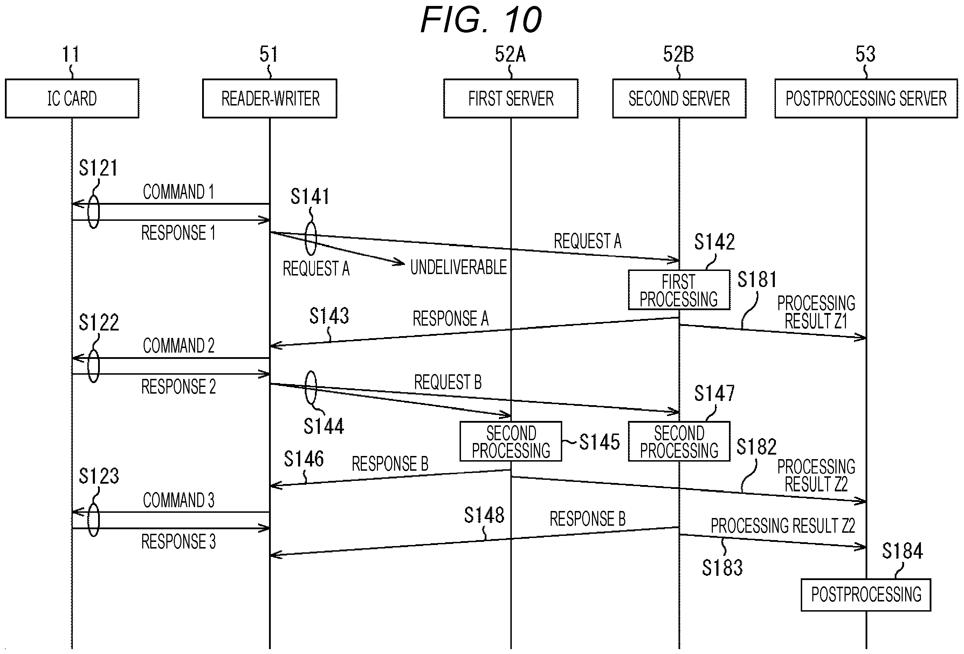

Fig. 10 is a flowchart illustrating processing in which communication processes of the postprocessing server 53 are added to the communication processes of the data processing system 40 illustrated in Fig. 8.

In the description in Fig. 10, only the processes newly added to the processes described in Fig. 8 will be described.

After the second server 52B executes the first processing in step S142, in step S181, the second server 52B transmits a processing result Z1 to the postprocessing server 53 as transaction required information. The order of the processes in steps S181 and S143 is not limited.

After the first server 52A executes the second processing in step S145, in step S182, the first server 52A transmits a processing result Z2 to the postprocessing server 53 as transaction required information. The order of the processes in steps S182 and S146 is not limited.

After the second server 52B executes the second processing in step S147, in step S183, the second server 52B transmits a processing result Z2 to the postprocessing server 53 as transaction required information. The order of the processes in steps S183 and S148 is not limited.

Because the second processing performed by the first server 52A and the second server 52B is the same processing, the processing result Z2 transmitted from the first server 52A in step S182 and the processing result Z2 transmitted from the second server 52B in step S183 are the same.

In step S184, the postprocessing server 53 consolidates pieces of transaction required information transmitted from the plurality of servers 52 in processes constituting a transaction, and determines a result of the entire transaction. Furthermore, the postprocessing server 53 performs predetermined processing that has been decided in advance, on the basis of the result of the entire transaction.

In the consolidation of the pieces of transaction required information, the postprocessing server 53 performs processing of recognizing the same processing results transmitted from the plurality of servers 52 as one processing result, and excluding duplication in the plurality of servers 52.

As described above, in a case where the data processing system 40 has a configuration including the postprocessing server 53, each of the servers 52 transmits information required for processing of the entire transaction, to the postprocessing server 53 being another information processing device, on the basis of an execution result of each process. The postprocessing server 53 consolidates pieces of transaction required information transmitted from the plurality of servers 52 in processes constituting a transaction, and determines a result of the entire transaction.

### <4. Second problem that can be caused in configuration including a plurality of servers, and countermeasure>

Next, a second problem that can be caused in a configuration including a plurality of servers, and a countermeasure will be described.

As seen in the sequence of the transaction illustrated in Fig. 5, mutual authentication in which the reader-writer 51 authenticates the IC card 11 and the IC card 11 authenticates the reader-writer 51 is performed in a series of communication processes. As a method by which the reader-writer 51 authenticates the IC card 11, a method called a challenge-response method is generally used.

The challenge-response method will be simply described as follows.

First of all, the reader-writer 51 generates random numbers and transmits the generated random numbers or a value that is based on the random numbers (hereinafter, the value will be referred to as a random challenge.) to the IC card 11. The IC card 11 performs specific calculation on the random challenge using a secret key held by the IC card 11, and transmits (replies) the calculation result to the reader-writer 51. By verifying the calculation result of the random challenge (RC) transmitted from the IC card 11 (hereinafter, referred to as an RC calculation result.), the reader-writer 51 authenticates that the IC card 11 is a correct communication partner holding a secret key.

In a thin-client data processing system, by a server 52 generating the aforementioned random challenge and verifying an RC calculation result, it is authenticated that the IC card 11 is a correct communication partner holding a secret key.

In a case where the data processing system 40 has a configuration including a plurality of server as described above, because the reader-writer 51 transmits an RC calculation result to the plurality of servers 52, a state in which authentication processing has been performed plurality of times can be caused (second problem).

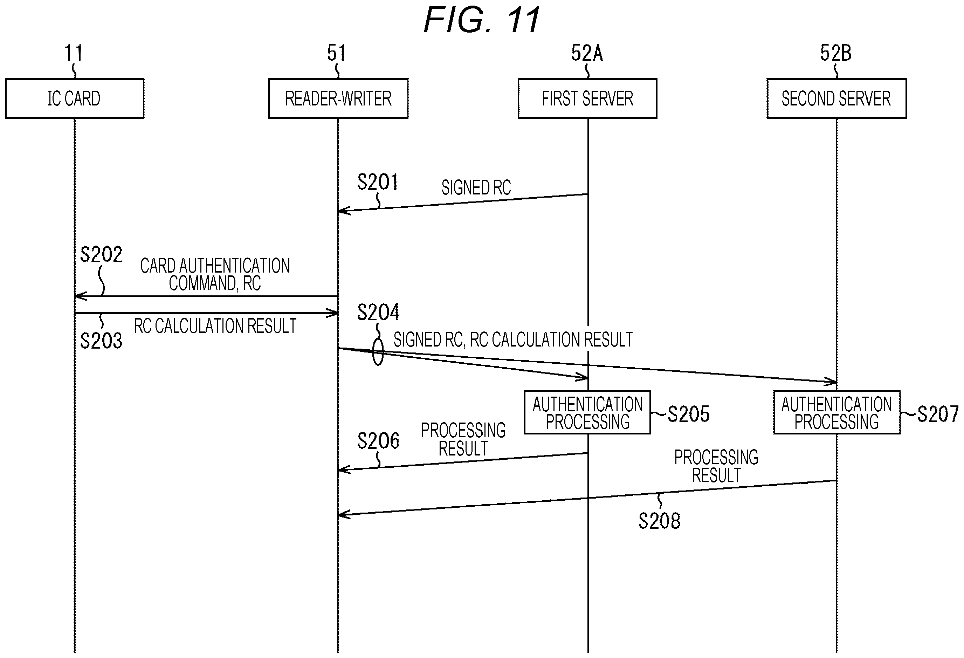

Communication processes to be performed in a case where a state in which authentication processing has been performed plurality of times can be caused will be described with reference to a flowchart in Fig. 11.

First of all, in step S201, one of the plurality of servers 52, for example, the first server 52A generates a random challenge (hereinafter, referred to as RC.), and transmits a signed RC obtained by assigning the generated RC a digital signature, to the reader-writer 51. The digital signature is information certifying that the random challenge (RC) has been generated by the correct server 52.

In the present embodiment, predetermined one server 52 of a plurality of prepared servers 52 is allocated as a server 52 that generates an RC, and the allocated server 52 generates an RC regularly or irregularly, for example, and transmits the generated RC to the reader-writer 51. Note that a dedicated server 52 for generating an RC may be provided, or a server 52 may generate an RC only when a request for random challenge generation is received from the reader-writer 51.

In step S202, the reader-writer 51 receives the signed RC from the first server 52A and verifies that the received RC has been generated by the correct first server 52A, and then, transmits a card authentication command and the RC to the IC card 11.

In step S203, the IC card 11 receives the card authentication command and the RC, performs specific calculation on the RC, and transmits (replies) the calculation result (RC calculation result) to the reader-writer 51.

In step S204, the reader-writer 51 transmits the RC calculation result received from the IC card 11, to each of the servers 52 together with the signed RC.

In step S205, the first server 52A receives the signed RC and the RC calculation result from the reader-writer 51, and authenticates the IC card 11 by verifying the RC calculation result using the RC.

Then, in step S206, the first server 52A transmits a processing result obtained by executing authentication processing, to the reader-writer 51.

Similarly on the second server 52B side, in step S207, the second server 52B receives the signed RC and the RC calculation result from the reader-writer 51, and authenticates the IC card 11 by verifying the RC calculation result using the received RC.

Then, in step S208, the second server 52B transmits a processing result obtained by executing authentication processing, to the reader-writer 51.

As described above, in the data processing system 40 including the plurality of servers 52, in a case where authentication processing of the IC card 11 is performed on the server side, for example, a situation in which the IC card 11 touches the reader-writer 51 a plurality of times even though the IC card 11 touches the reader-writer 51 only once can be caused.

For example, in a case where the data processing system 40 is an electronic money system that manages balance of electronic money on the server side, payment is possibly performed a plurality of times by performing a touch only once.

Thus, communication processes to be performed by the data processing system 40, in which a countermeasure against the second problem is taken will be described.

As a countermeasure against the second problem, the first server 52A that generates an RC also generates a transaction ID (TID) being information for identifying a transaction, and transmits the TID to the reader-writer 51. The reader-writer 51 transmits the TID to each of the servers 52 together with the signed RC and the RC calculation result. Each of the servers 52 transmits a processing result of authentication processing to the postprocessing server 53 together with the TID. Then, on the basis of the received TID, the postprocessing server 53 collates (compares) authentication processing results received from the plurality of servers 52.

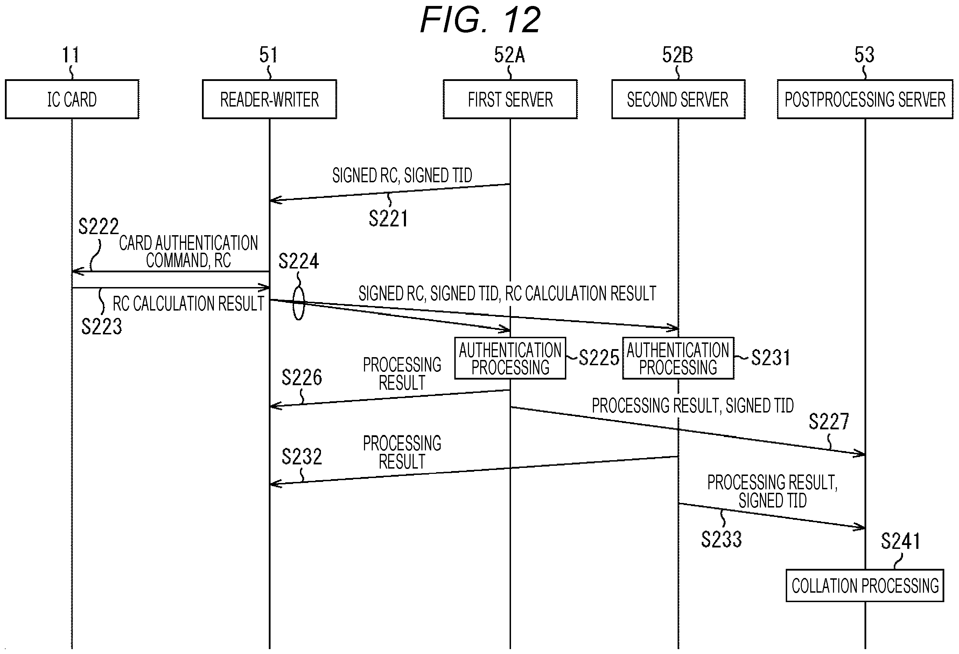

Fig. 12 is a flowchart illustrating communication processes performed by the data processing system 40, in which a countermeasure against the second problem is taken.

First of all, in step S221, one of the plurality of servers 52, for example, the first server 52A generates an RC and a TID being information for identifying a transaction, and transmits a signed RC and a signed TID obtained by assigning the generated RC and the TID digital signatures, to the reader-writer 51.

In step S222, the reader-writer 51 receives the signed RC from the first server 52A and verifies that the received RC and TID have been generated by the correct server 52, and then, transmits a card authentication command and the RC to the IC card 11.

In step S223, the IC card 11 receives the card authentication command and the RC, performs specific calculation on the RC, and transmits (replies) the calculation result (RC calculation result) to the reader-writer 51.

In step S224, the reader-writer 51 transmits the RC calculation result received from the IC card 11, to each of the servers 52 together with the signed RC and the signed TID.

In step S225, the first server 52A receives the signed RC, the signed TID, and the RC calculation result from the reader-writer 51, and verifies that the received RC and the TID have been generated by the correct first server 52A. Then, the first server 52A authenticates the IC card 11 by verifying the RC calculation result using the RC. In step S226, the first server 52A transmits a processing result obtained by executing authentication processing, to the reader-writer 51.

Subsequently, in step S227, the first server 52A transmits a processing result of the authentication processing, and the signed TID for identifying the authentication processing, to the postprocessing server 53.

Similarly on the second server 52B side, in step S231, the second server 52B receives the signed RC, the signed TID, and the RC calculation result from the reader-writer 51, and verifies that the received RC and the TID have been generated by the correct first server 52A. Then, the second server 52B authenticates the IC card 11 by verifying the RC calculation result using the RC. In step S232, the second server 52B transmits a processing result obtained by executing authentication processing, to the reader-writer 51.

Subsequently, in step S233, the second server 52B transmits a processing result of the authentication processing, and the signed TID for identifying the authentication processing, to the postprocessing server 53.

In step S241, the postprocessing server 53 receives processing results of the authentication processing and signed TIDs that have been transmitted from the plurality of servers 52, and performs collation processing that is based on the TIDs. More specifically, the postprocessing server 53 collates the TIDs transmitted from the plurality of servers 52, and regards processing results assigned the same TID as the same processing result, thereby performing processing assuming that predetermined authentication processing has been performed only once.

With this configuration, for example, in a case where the data processing system 40 is an electronic money system that manages balance of electronic money on the server side using a card ID being IC card identification information held by the IC card 11, as a key, payment processing having the same TID can be treated as the same payment.

As described above, the first server 52A that generates an RC also generates a TID, and each of the servers 52 that has performed authentication processing transmits a processing result of the authentication processing to the postprocessing server 53 together with the TID. With this configuration, because the postprocessing server 53 can exclude the duplication of the same processing on the basis of a TID allocated to a processing result, it is possible to solve the second problem that can be caused in the data processing system 40 including the plurality of servers 52.

Note that, in the communication processes in Fig. 12, the first server 52A that generates an RC simultaneously generates an RC and a TID, and transmits the RC and the TID to the reader-writer 51, but a generation timing of a TID and a timing of transmission to the reader-writer 51 may be different timings from those of an RC.

Furthermore, a TID may be generated irrespective of an RC, or may be generated by the calculation that is based on a value of an RC.

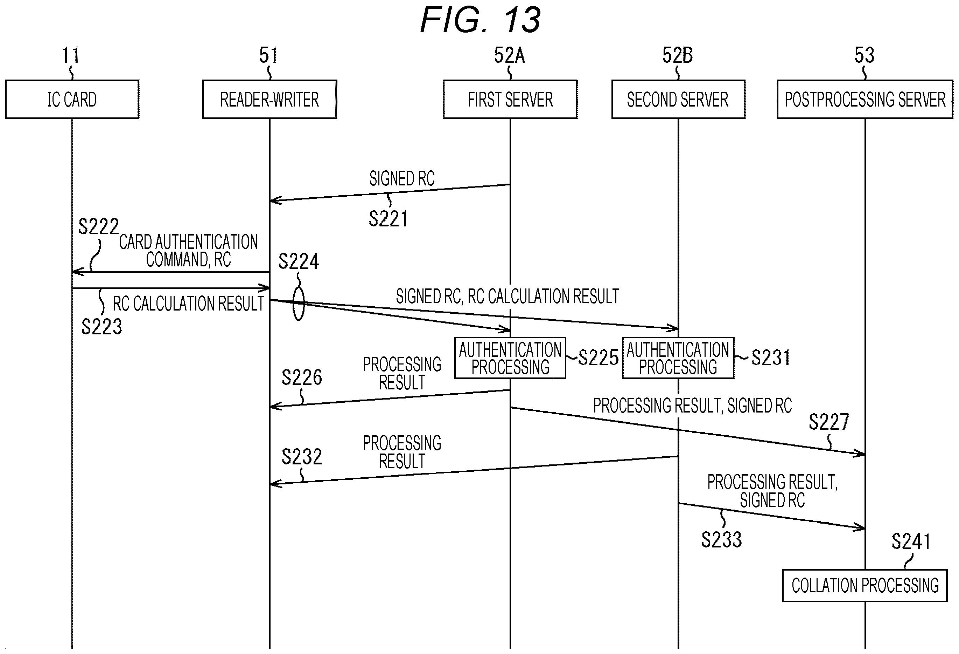

Moreover, a TID may be substituted with an RC (an RC may also serve as a TID). In a case where a TID may be substituted with an RC, as illustrated in Fig. 13, in step S221, data to be transmitted to the reader-writer 51 by the first server 52A that generates an RC becomes only a signed RC.

Fig. 13 is a flowchart illustrating a modified example of a communication process illustrated in Fig. 12. Because flows of processes in Fig. 12 and Fig. 13 are the same, in Fig. 13, the same step numbers as those in Fig. 12 are allocated.

In step S224, the reader-writer 51 transmits the signed RC and the RC calculation result received from the IC card 11, to each of the servers 52. In steps S227 and S232, processing results of the authentication processing and the signed RCs are transmitted to the postprocessing server 53. In step S241, the postprocessing server 53 performs the collation processing on the basis of the RCs.

Next, a countermeasure against the second problem in which the postprocessing server 53 is not used will be described.

In a case where a configuration in which the postprocessing server 53 is not used is employed, the first server 52A that generates an RC sets an effective period of the generated RC to a short time (for example, several seconds), assigns the set effective period a digital signature, and transmits the effective period to the reader-writer 51 together with the signed RC. Each of the servers 52 that performs authentication on the basis of the RC calculation result verifies the effective period of the RC, and executes authentication processing in a case where the effective period is effective (i.e. falling within the effective period).

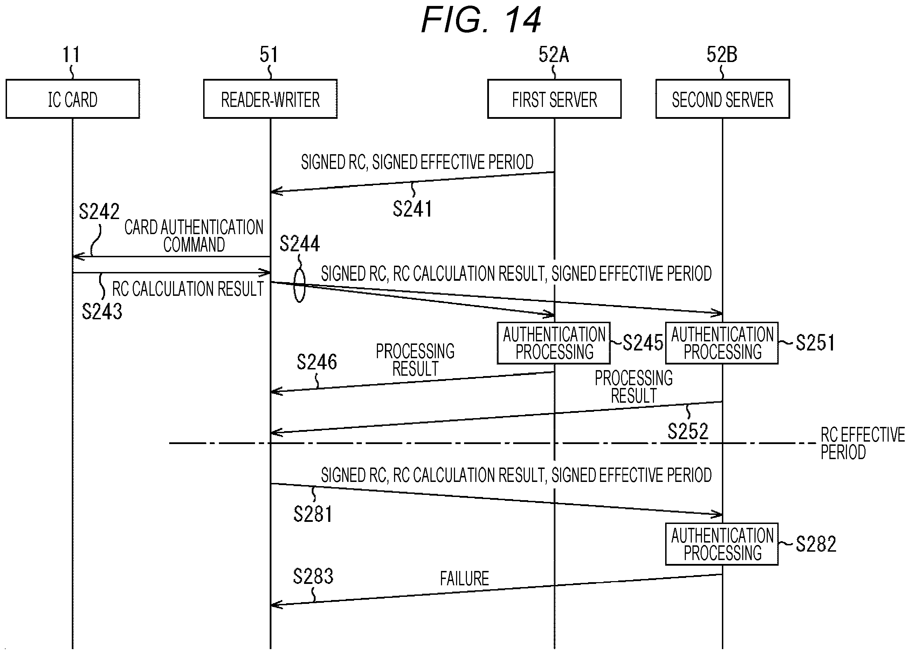

Fig. 14 is a flowchart illustrating a specific example of communication processes performed in a case where the postprocessing server 53 is not used.

First of all, in step S241, one of the plurality of servers 52, for example, the first server 52A generates an RC and sets an effective period of the RC, and transmits a signed RC and a signed effective period obtained by assigning the generated RC and the TID digital signatures, to the reader-writer 51.

In step S242, the reader-writer 51 receives the signed RC and the signed effective period from the first server 52A and verifies that the received RC has been generated by the correct server 52, and then, transmits a card authentication command and the RC to the IC card 11.

In step S243, the IC card 11 receives the card authentication command and the RC, performs specific calculation on the RC, and transmits (replies) the calculation result (RC calculation result) to the reader-writer 51.

In step S244, the reader-writer 51 transmits the RC calculation result received from the IC card 11, to each of the servers 52 together with the signed RC and the signed effective period.

In step S245, the first server 52A receives the signed RC, the signed effective period, and the RC calculation result from the reader-writer 51, and verifies that the received RC and the effective period have been generated by the correct first server 52A. Then, the first server 52A authenticates the IC card 11 by verifying that the effective period is effective and further verifying the RC calculation result. In step S246, the first server 52A transmits a processing result obtained by executing authentication processing, to the reader-writer 51.

Similarly on the second server 52B side, in step S251, the second server 52B receives the signed RC, the signed effective period, and the RC calculation result from the reader-writer 51, and verifies that the received RC and the effective period have been generated by the correct first server 52A. Then, the second server 52B authenticates the IC card 11 by verifying that the effective period is effective and further verifying the RC calculation result. In step S252, the second server 52B transmits a processing result obtained by executing authentication processing, to the reader-writer 51.

Because the effective period is set to an extremely short time, the reader-writer 51 performs processing of regarding processing results transmitted from the plurality of servers 52 within the effective period, as the same processing.

On the other hand, for example, in a case where a signed RC, a signed effective period, and an RC calculation result are transmitted to a predetermined server 52 (the second server 52B in Fig. 14) from the reader-writer 51, in a period after the effective period as in steps S281 to S283 in Fig. 14, authentication processing does not succeed, and a failure processing result is replied to the reader-writer 51.

Thus, for example, even in a case where a malevolent reader-writer impersonating the reader-writer 51 acquires and transmits a signed RC, a signed effective period, and an RC calculation result to an arbitrary server 52, authentication processing does not succeed, and misbehaving processing can be prevented.

### <5. Hardware configuration example>

### <Configuration examples of IC card and reader-writer>

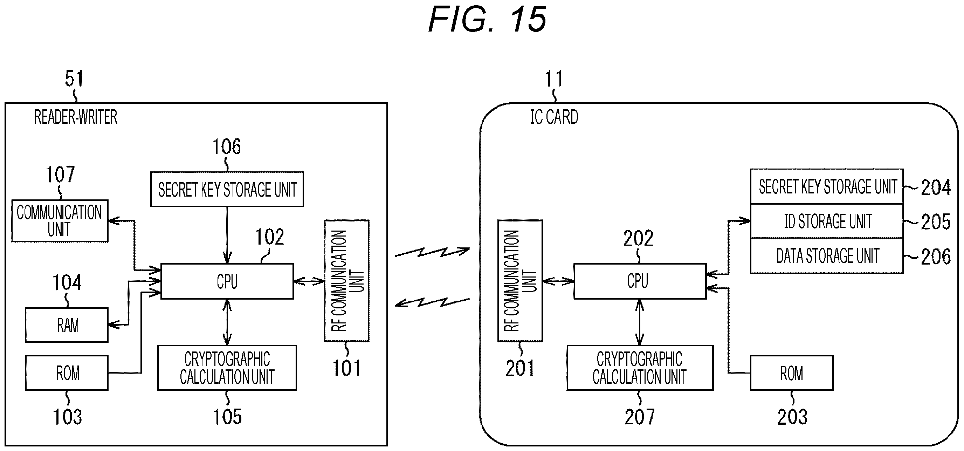

Fig. 15 is a block diagram illustrating configuration examples of the IC card 11 and the reader-writer 51.

An RF communication unit 101 of the reader-writer 51 congests predetermined electromagnetic waves, and detects whether or not the IC card 11 approaches, on the basis of a change in load that is caused in accordance with the congestion, and transmits and receives various kinds of data with the IC card 11 in a noncontact manner when the IC card 11 approaches, for example.

The RF communication unit 101 includes an antenna, and performs proximity communication (noncontact communication) compliant with the ISO/IEC 14443 or the ISO/IEC 18092, for example, with the IC card 11. The RF communication unit 101 performs amplitude shift keying (ASK) modulation of carrier waves at a predetermined frequency that are supplied from an oscillation circuit (OSC) (not illustrated), for example, on the basis of data supplied from the CPU 102, and outputs the generated modulation waves from the antenna as electromagnetic waves. Furthermore, the modulation waves (ASK modulation waves) acquired via the antenna are demodulated and the demodulated data is supplied to the CPU 102.

On the basis of the control of the CPU 102, the RF communication unit 101 transmits a command to the IC card 11 and receives a response, using the electromagnetic waves.

A central processing unit (CPU) 102 of the reader-writer 51 is a control unit that controls the entire operation of the reader-writer 51. The CPU 102 executes various kinds of processing by loading programs stored in a read only memory (ROM) 103, onto a random access memory (RAM) 104. Furthermore, pieces of data necessary for the CPU 102 executing various kinds of processing, and the like are also appropriately stored into the RAM 104.

The CPU 102 is configured to encrypt and decrypt data on the basis of a predefined cryptographic algorithm by controlling a cryptographic calculation unit 105. Here, the cryptographic algorithm of the cryptographic calculation unit 105 is a cryptographic algorithm such as data encryption standard (DES), Triple DES, or advanced encryption standard (AES), and is a cryptographic algorithm of a so-called secret key (common key).

In a case where encryption or decryption of data is performed in the reader-writer 51, for example, by the CPU 102 supplying a secret key stored in a secret key storage unit 106, to the cryptographic calculation unit 105 together with data to be encrypted or decrypted, encryption or decryption of the supplied data that uses the supplied secret key is executed by the cryptographic calculation unit 105.

The secret key stored in the secret key storage unit 106 is assumed to be the same as a secret key stored in the IC card 11, and the secret key is prestored only in the reader-writer 51 that supports the IC card 11, and is the reader-writer 51 permitted to read out a card ID being identification information unique to the IC card 11.

A communication unit 107 exchanges predetermined data with the plurality of servers 52 by network communication performed via a predetermined network, on the basis of the control of the CPU 102. As described above, examples of the predetermined network include the Internet, a telephone circuit network, a satellite communication network, various LANs including Ethernet (registered trademark), a WAN, a dedicated circuit network such as an IP-VPN, and the like. The type of the predetermined network is not limited.

An RF communication unit 201 of the IC card 11 has a configuration including a coiled antenna and an LC circuit including a capacitor, for example, and performs proximity communication (noncontact communication) compliant with the ISO/IEC 14443 or the ISO/IEC 18092, for example, with the reader-writer 51.

The RF communication unit 201 is configured to resonate with electromagnetic waves at the predetermined frequency congested from the reader-writer 51. Furthermore, the RF communication unit 201 rectifies an alternate current magnetic field excited in the antenna, by ASK demodulation, stabilizes the rectified alternate current magnetic field, and supplies the alternate current magnetic field to each unit as a direct-current power source. Power of electromagnetic waves congested from the reader-writer 51 is adjusted so as to generate a magnetic field for providing power necessary for the IC card 11.

Furthermore, the RF communication unit 201 demodulates modulation waves (ASK modulation waves) received via the antenna, by performing envelope demodulation, performs binary phase shift keying (BPSK) demodulation on the demodulated data, supplies the resultant data to a CPU 202, and generates a clock signal having the same frequency as a clock frequency of the received signal, and supplies the clock signal to the CPU 202.

Moreover, in a case where predetermined information is transmitted to the reader-writer 51, the RF communication unit 201 performs ASK modulation of data supplied from the CPU 202 and subjected to BPSK modulation, on the basis of a variation in the load of the antenna, for example, and transmits the modulation component to the reader-writer 51 via the antenna.

The CPU 202 is a control unit that controls the entire operation of the IC card 11, and executes various kinds of processing by executing programs stored in a ROM 203, for example. Storage units from a secret key storage unit 204 to a data storage unit 206 include an electrically erasable programmable read-only memory (EEPROM) or the like, for example, and each serve as a part of a storage region of the EEPROM.

The CPU 202 is configured to encrypt and decrypt data on the basis of a predefined cryptographic algorithm by controlling a cryptographic calculation unit 207. Here, a cryptographic algorithm of the cryptographic calculation unit 207 is assumed to be the same algorithm as the cryptographic algorithm of the cryptographic calculation unit 105, and is also assumed to be a cryptographic algorithm of a secret key (common key) encryption method.

In a case where encryption or decryption of data is performed in the IC card 11, for example, by the CPU 202 supplying a secret key stored in the secret key storage unit 204, to the cryptographic calculation unit 207 together with data to be encrypted or decrypted, encryption or decryption of the supplied data that uses the supplied secret key is executed by the cryptographic calculation unit 207.

An ID storage unit 205 stores a card ID being identification information unique to the IC card 11.

The data storage unit 206 stores application data for providing various kinds of services and the like that are to be performed using the IC card 11, and the like, as necessary.

Note that the cryptographic calculation unit 105 and the cryptographic calculation unit 207 can also be each formed as software.

The reader-writer 51 and the IC card 11 have the above-described configurations.

Note that, the aforementioned description has been given assuming that the reader-writer 51 and the IC card 11 are separate devices, and the reader-writer 51 performs noncontact communication with the IC card 11 serving as an external device.

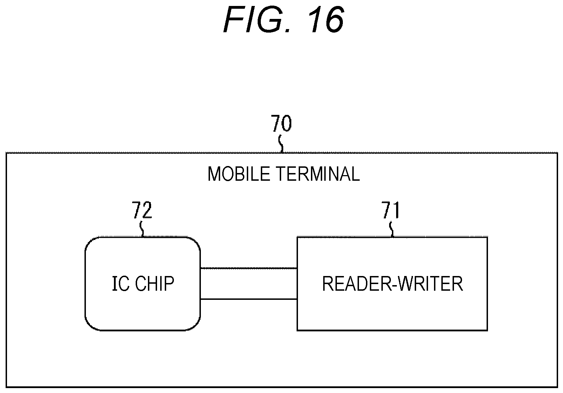

However, for example, like a mobile terminal known as a mobile wallet (registered trademark) or the like, a configuration in which functions of the reader-writer 51 and the IC card 11 are included in one device can be employed. Specifically, as illustrated in Fig. 16, a mobile terminal 70 includes a reader-writer 71 having a function of the reader-writer 51, and an IC chip 72 having a function of the IC card 11. Also in this case, the IC chip 72 is an external device that exists on the outside when viewed from the reader-writer 71. Thus, the external device in this specification may be present inside the same casing.

The reader-writer 71 and the IC chip 72 that exist inside the same casing are connected by a metal wire, an input-output terminal, or the like, and a command and a response are exchanged between the reader-writer 71 and the IC chip 72 by wired communication. Furthermore, the IC chip 72 also has a configuration of the RF communication unit 201 in Fig. 15, and can also perform noncontact communication with another reader-writer (communication device) having a configuration similar to the reader-writer 51.

### <Configuration example of server device>

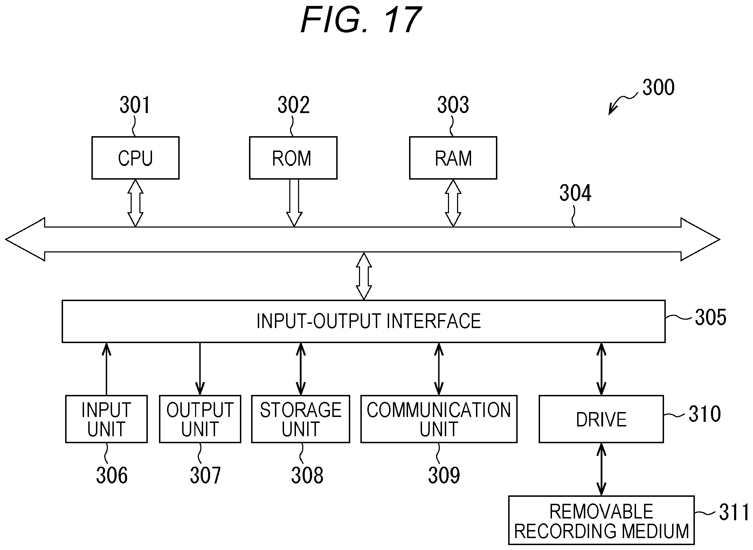

Fig. 17 is a block diagram illustrating a configuration example of a server device used as each of the servers 52 or the postprocessing server 53.

In a server device 300, a central processing unit (CPU) 301, a read only memory (ROM) 302, and a random access memory (RAM) 303 are connected to one another via a bus 304.

An input-output interface 305 is further connected to the bus 304. An input unit 306, an output unit 307, a storage unit 308, a communication unit 309, and a drive 310 are connected to the input-output interface 305.

The input unit 306 includes a keyboard, a mouse, a microphone, a touch panel, an input terminal, and the like. The output unit 307 includes a display, a loudspeaker, an output terminal, and the like. The storage unit 308 includes a hard disc, a RAM disc, a nonvolatile memory, and the like. The communication unit 309 includes a network interface and the like. The drive 310 drives a removable recording medium 311 such as a magnetic disc, an optical disk, a magnet-optical disk, or a semiconductor memory.

In the server device 300 having the above-described configuration, the above-described series of processes are performed by the CPU 301 loading programs stored in, for example, the storage unit 308, into the RAM 303 via the input-output interface 305 and the bus 304, and executing the programs. The CPU 301 is a control unit that controls the entire operation of the server device 300. Furthermore, pieces of data necessary for the CPU 301 executing various kinds of processing, and the like are also appropriately stored into the RAM 303.

In the server device 300, the programs can be installed on the storage unit 308 via the input-output interface 305 by attaching the removable recording medium 311 to the drive 310. Furthermore, the programs can be received via a wired or wireless transmission medium such as a local area network, the Internet, and digital satellite broadcasting by the communication unit 309 and installed on the storage unit 308. Yet alternatively, the program can be preinstalled on the ROM 302 and the storage unit 308.

In this specification, it should be appreciated that steps described in the flowcharts are performed in chronological order in accordance with the described order in some cases. In other cases, steps needs not be processed in chronological order, and may be concurrently executed, or executed at a required timing such as a time when a call is performed, for example.

In this specification, a system means a set of a plurality of constituent elements (apparatuses, modules (parts), and the like), and it does not matter whether or not all the constituent elements are provided in the same casing. Thus, a plurality of apparatuses stored in separate casings and connected via a network, and a single apparatus in which a plurality of modules is stored in a single casing are both regarded as systems.

An embodiment of the present technology is not limited to the above-described embodiment, and various changes can be made without departing from the scope of the present technology.

In the aforementioned example, the IC card 11 and the reader-writer 51 exchange predetermined data by proximity communication (noncontact communication) compliant with the ISO/IEC 14443 or the ISO/IEC 18092, but a communication specification other than these may be used.

For example, a mode including only a partial function of the aforementioned embodiment can be employed.

For example, the present technology can employ a configuration of cloud computing in which a single function is shared by a plurality of apparatuses and processed in cooperation with each other, via a network.

Furthermore, instead of being executed in a single apparatus, each step described in the above-described flowcharts can be executed by a plurality of apparatuses in a shared manner.

Moreover, in a case where a plurality of processes is included in a single step, the plurality of processes included in the single step can be executed by a plurality of apparatuses in a shared manner, instead of being executed in a single apparatus.

Note that effects described in this specification are mere exemplifications, and are not limited, and effects other than those described in this specification may be caused.

### REFERENCE SIGNS LIST

- 11: IC card
- 40: Data processing system
- 51: Reader-writer
- 52A: First server
- 52B: Second server
- 52C: Third server
- 53: Postprocessing server
- 70: Mobile terminal
- 70: Reader-writer
- 72: IC chip
- 101: RF communication unit
- 102: CPU
- 107: Communication unit
- 201: RF communication unit
- 300: Server device
- 301: CPU
- 302: ROM
- 303: RAM
- 306: Input unit
- 307: Output unit
- 308: Storage unit
- 309: Communication unit
- 310: Drive

## Claims

1. A communication device (51) comprising:
a communication unit (107) configured to transmit a command to an external device, transmit a predetermined request to a plurality of servers (52) on a basis of a result obtained by transmitting the command to the external device (11), and receive a response to the request from the plurality of servers; and
a control unit (102) configured to transmit a next command to the external device on a basis of the response of one of the plurality of servers, the response having been received earliest, wherein the control unit is configured to transmit the next command to the external device without waiting for responses to be received from all of the plurality of servers;
wherein the communication unit transmits information included in the response of the server, the response having been received earliest, to the plurality of servers.

2. The communication device according to claim 1,
wherein information included in the response of the server, the response having been received earliest, is encrypted using a key not decodable by the communication device, and
the communication unit transmits the information encrypted using the key, to the plurality of servers.

3. The communication device according to any of claims 1 to 2,
wherein the communication unit receives a random challenge in a challenge-response method, and transmits the random challenge, and a calculation result of the random challenge that has been received from the external device, to the plurality of servers.

4. The communication device according to claim 3,
wherein the communication unit also receives one of transaction identification information for identifying a transaction, and effective period information indicating an effective period of the random challenge, and transmits said one of the transaction identification information the effective period information to the plurality of servers.

5. A data processing system comprising:
the communication device of any of claims 1 to 4, and
a plurality of servers (52A, 52B, 52C),
wherein each of the plurality of servers includes
a second communication unit (309) configured to receive the request from the communication device and transmit a response including a processing result of processing executed in response to the request, to the communication device, and
a second control unit (301) configured to execute the processing, and
the processing result included in the response is encrypted using a key not decodable by the communication device.

## Patentansprüche

1. Kommunikationsvorrichtung (51), umfassend:
eine Kommunikationseinheit (107), die konfiguriert ist, um einen Befehl an eine externe Vorrichtung zu übertragen, eine vorbestimmte Anforderung an eine Vielzahl von Servern (52) auf einer Basis eines Ergebnisses, das durch Übertragen des Befehls an die externe Vorrichtung (11) erhalten wird, zu übertragen und eine Antwort auf die Anforderung von der Vielzahl von Servern zu empfangen; und
eine Steuereinheit (102), die konfiguriert ist, um einen nächsten Befehl an die externe Vorrichtung auf einer Basis der Antwort eines der Vielzahl von Servern zu übertragen, wobei die Antwort am frühesten empfangen wurde, wobei die Steuereinheit konfiguriert ist, um den nächsten Befehl an die externe Vorrichtung zu übertragen, ohne auf von allen der Vielzahl von Servern zu empfangende Antworten zu warten;
wobei die Kommunikationseinheit Informationen, die in der Antwort des Servers eingeschlossen sind, wobei die Antwort am frühesten empfangen wurde, an die Vielzahl von Servern empfangen überträgt.

2. Kommunikationsvorrichtung nach Anspruch 1,
wobei Informationen, die in der Antwort des Servers eingeschlossen sind, die Antwort, die am frühesten empfangen wurde, unter Verwendung eines von der Kommunikationsvorrichtung nicht entschlüsselbaren Schlüssels verschlüsselt ist, und
die Kommunikationseinheit die unter Verwendung des Schlüssels verschlüsselten Informationen an die Vielzahl von Servern überträgt.

3. Kommunikationsvorrichtung nach einem der Ansprüche 1 bis 2,
wobei die Kommunikationseinheit eine Zufallsabfrage in einem Abfrage-Antwort-Verfahren empfängt und die Zufallsabfrage und ein Berechnungsergebnis der Zufallsabfrage, das von der externen Vorrichtung empfangen wurde, an die Vielzahl von Servern überträgt.

4. Kommunikationsvorrichtung nach Anspruch 3,
wobei die Kommunikationseinheit auch eine von Transaktionsidentifikationsinformationen zum Identifizieren einer Transaktion und Effektivperiodeninformationen, die eine Effektivperiode der Zufallsabfrage angeben, empfängt und die eine der Transaktionsidentifikationsinformationen und die Effektivperiodeninformationen an die Vielzahl von Servern überträgt.

5. Datenverarbeitungssystem, umfassend:
die Kommunikationsvorrichtung nach einem der Ansprüche 1 bis 4, und
eine Vielzahl von Servern (52A, 52B, 52C),
wobei jeder der Vielzahl von Servern einschließt
eine zweite Kommunikationseinheit (309), die konfiguriert ist, um die Anforderung von der Kommunikationsvorrichtung zu empfangen und eine Antwort einschließlich eines Verarbeitungsergebnisses der Verarbeitung, die als Reaktion auf die Anforderung ausgeführt wird, an die Kommunikationsvorrichtung zu übertragen, und
eine zweite Steuereinheit (301), die konfiguriert ist, um die Verarbeitung auszuführen, und
das in der Antwort enthaltene Verarbeitungsergebnis unter Verwendung eines von der Kommunikationsvorrichtung nicht entschlüsselbaren Schlüssels verschlüsselt ist.

## Revendications

1. Dispositif de communication (51) comprenant :
une unité de communication (107) configurée pour transmettre une commande à un dispositif externe, transmettre une demande prédéterminée à une pluralité de serveurs (52) sur la base d'un résultat obtenu en transmettant la commande au dispositif externe (11), et recevoir une réponse à la demande provenant de la pluralité de serveurs ; et
une unité de commande (102) configurée pour transmettre une commande suivante au dispositif externe sur la base de la réponse d'un de la pluralité de serveurs, la réponse ayant été reçue le plus tôt, dans lequel l'unité de commande est configurée pour transmettre la commande suivante au dispositif externe sans attendre que des réponses soient reçues de tous les serveurs de la pluralité de serveurs ;
dans lequel l'unité de communication transmet des informations incluses dans la réponse du serveur, la réponse ayant été reçue le plus tôt, à la pluralité de serveurs.

2. Dispositif de communication selon la revendication 1,
dans lequel des informations incluses dans la réponse du serveur, la réponse ayant été reçue le plus tôt, sont chiffrées à l'aide d'une clé non décodable par le dispositif de communication, et
l'unité de communication transmet les informations chiffrées à l'aide de la clé, à la pluralité de serveurs.

3. Dispositif de communication selon l'une quelconque des revendications 1 à 2,
dans lequel l'unité de communication reçoit un défi aléatoire dans un procédé de réponse au défi, et transmet le défi aléatoire, et un résultat de calcul du défi aléatoire qui a été reçu à partir du dispositif externe, à la pluralité de serveurs.

4. Système de communication selon la revendication 3,
dans lequel l'unité de communication reçoit également l'une des informations d'identification de transaction pour identifier une transaction, et des informations de période effective indiquant une période effective du défi aléatoire, et transmet ladite une des informations d'identification de transaction des informations de période effective à la pluralité de serveurs.

5. Système de traitement de données comprenant :
le dispositif de communication selon l'une quelconque des revendications 1 à 4, et
une pluralité de serveurs (52A, 52B, 52C),
dans lequel chacun de la pluralité de serveurs comporte
une seconde unité de communication (309) configurée pour recevoir la demande provenant du dispositif de communication et transmettre une réponse comportant un résultat de traitement de traitement exécuté en réponse à la demande, au dispositif de communication, et
une seconde unité de commande (301) configurée pour exécuter le traitement, et
le résultat de traitement inclus dans la réponse est chiffré à l'aide d'une clé non décodable par le dispositif de communication.
